# FASCICULE DE BREVET EUROPEEN

(11) **EP 2 831 397 B1**
(45) Date de publication et mention de la délivrance du brevet: **18.07.2018**
(21) Numéro de dépôt: 13722482.0
(22) Date de dépôt: 29.03.2013
(51) Int. Cl.: F02C 9/18, F16K 31/00, F02C 6/12, F16K 31/56, F16K 31/06

(54) **DISPOSITIF ACTIONNEUR A COMMANDE ELECTRIQUE INTEGRANT UNE FONCTION THERMOSTATIQUE, VANNE**
ELEKTRISCH GESTEUERTE BETÄTIGUNGSVORRICHTUNG MIT THERMOSTATISCHER FUNKTION UND VENTIL
ELECTRICALLY CONTROLLED ACTUATING DEVICE INCORPORATING A THERMOSTATIC FUNCTION AND VALVE

(30) Priorité: 30.03.2012 FR 1252889
(43) Date de publication de la demande: 04.02.2015
(73) Titulaire: Safran Aircraft Engines, 75015 Paris (FR)
(72) Inventeur: DE WERGIFOSSE, Huguette, F-77515 Saint-Augustin (FR); DE WERGIFOSSE, Eric, F-77515 Saint-Augustin (FR)
(74) Mandataire: Camus, Olivier Jean-Claude
(86) Numéro de dépôt international: PCT/FR2013/050696
(87) Numéro de publication internationale: WO 2013/144524

(56) Documents cités:
- DE-A1-102009 023 592
- US-A1- 2010 011 764

## Description

### DOMAINE

Le domaine de l'invention concerne les dispositifs actionneurs tels que des vannes utilisées dans les moteurs d'avion notamment pour la régulation des systèmes de dépressurisation et/ou des systèmes d'échanges thermique du groupe de lubrification. L'invention se rapporte, plus particulièrement, aux vannes qui nécessitent un système de commandes permettant de limiter les lignes de codes d'un calculateur pour moteur d'avion.

### ETAT DE L'ART

Actuellement, dans l'aéronautique, les contraintes de gestion des moteurs d'avion entrainent une optimisation des calculateurs quant à leur architecture et leur programmation.

Les tâches effectuées par ces calculateurs sont nombreuses et ne peuvent tolérés les erreurs. Généralement et à titre d'exemple, un calculateur pour moteur d'avion contrôle l'alimentation en carburant, la géométrie interne du moteur, les interfaces avec l'inverseur de poussée et assure des fonctions avancées telles que la protection contre la survitesse. Il est donc important de limiter le nombre de commandes de pilotages électriques provenant du calculateur, également appelé « calculateur moteur », notamment de tous les systèmes de régulation du moteur. En particulier, les systèmes de régulation de lubrification du moteur, de dépressurisation d'enceinte d'huile, de système d'échange thermique du groupe de lubrification sont concernés.

Ces systèmes comprennent généralement des vannes de régulations. Une solution pour limiter les lignes de commandes du calculateur moteur est de disposer de vannes hybrides ou thermostatiques, c'est-à-dire intégrant des commandes limitant le nombre de lignes du calculateur.

Un exemple de solution de vanne thermostatique repose sur le principe de la dilatation d'un liquide ou d'un gaz. La vanne est composée d'une enceinte comprenant un liquide ou un gaz qui se dilate ou se contracte en fonction de la température. Cette pression est transférée à l'élément de séparation du liquide qui peut être, par exemple, un soufflet ou une membrane.

La position de réglage est déterminée par l'équilibre des forces entre le ressort de rappel et l'élément de séparation. Ce type de vanne est autonome et fonctionne sans apport d'énergie.

Un inconvénient de cette solution est la non-fiabilité de l'élément de séparation et de sa faible tenue en fatigue qui diminue avec le nombre de cycles d'utilisation. Un risque de fuite est à envisager en cas de dégradation de cet élément.

Par ailleurs, le dispositif thermostatique comporte un inconvénient quant à la précision de la température critique au-delà de laquelle une action sur la vanne est engagée, notamment parce que l'élément thermostatique s'use et se dégrade au fil du temps.

L'exigence de robustesse de ces applications impose également des exigences élevées de fiabilité.

Un autre exemple repose sur un principe basé sur la dilatation d'un solide, tel que des bandes bimétalliques. Les deux matériaux d'une bande ont des coefficients de dilatation thermique différents. Sous l'effet de la température les deux matériaux se courbent générant une déflexion. Le déplacement du solide est ensuite transformé en un déplacement d'un clapet équipé de son ressort de rappel.

Ce second exemple de vanne est illustré dans la demande de brevet DE 10205518 (A1). Ce brevet est basé sur l'utilisation de disque conique à retournement pour vanne thermostatique dont le titre original est : « Thermostatic valve for controlling oil flow for IC engine has bimetallic strip which opens valve cone when temperature reaches predetermined value."

Ce second exemple comporte l'inconvénient de devoir faire intervenir l'ajout d'une seconde vanne de pilotage dans la mesure où des architectures de vannes commandées se combinent avec l'utilisation de disque conique à retournement. Autres exemples de vannes similaires sont illustrés dans les demandes de brevet US 2010/0011764 A1 et DE 10 2009 023 592 A1.

Dans les applications de moteurs d'avions, un inconvénient est celui de la minimisation du nombre de lignes du calculateur moteur ce qui ne peut être assuré lors de l'utilisation d'une pluralité de vannes.

Toutes les solutions existantes comportent des inconvénients dès lors qu'une fonction thermostatique doit être intégrée dans une vanne. Il peut s'agir d'un manque de fiabilité de l'élément thermostatique ou encore d'une complexité de l'architecture nécessitant l'utilisation d'une pluralité de vannes.

### RESUME DE L'INVENTION

L'invention permet de résoudre les inconvénients précités.

L'invention a pour objet un dispositif actionneur pouvant être une vanne.

Le dispositif actionneur comprend :
- une partie fixe formant un bâti comportant une entrée destinée à recevoir un fluide, une sortie principale et une seconde dite « de prélèvement » et des moyens de rappel permettant d'exercer une poussée mécanique sur une partie mobile ;
- une partie mobile comportant :
   ∘ un clapet comprenant une tige évoluant en translation entre une position d'ouverture de la sortie de prélèvement et une position de fermeture de la dite sortie sous l'effet de la poussée mécanique ;
- un dispositif thermostatique comprenant un disque conique de retournement solidaire d'une bague amovible autour de la tige du clapet, le retournement du disque au-delà d'une température critique connue, entrainant le clapet dans sa position de fermeture ;
- un dispositif de commande permettant la génération d'une force de maintien du clapet, le dispositif de commande pouvant être piloté de manière à ce qu'en dessous de la température critique, l'ouverture ou la fermeture du clapet résulte du bilan des forces entre la force de maintien et la poussée mécanique.

La force de maintien peut-être une force électromagnétique qui permet de retenir le clapet en position d'ouverture. La force de maintien s'oppose alors à la poussée mécanique.

Un avantage technique ce cette solution est que le retournement du disque a lieu pour une température donnée précise dont avec peu de disparité dans la marge d'erreur. De surcroit, la température critique de retournement peut être facilement paramétrée, notamment par un choix de disque conique à retournement adapté. Le diamètre intérieur ou extérieur du disque, son épaisseur ou les matériaux constituant les deux couches peuvent être choisies de manière à adapter une configuration à un cas d'usage.

Avantageusement, la poussée mécanique est exercée par au moins un ressort sous l'effet d'une force de rappel.

L'avantage de cette solution technique est qu'elle s'adapte à la majorité des mécanismes déjà existants comportant un ressort de rappel et un clapet dans les vannes.

Avantageusement, le clapet comprend un noyau, une tige et une bille de fermeture solidaire évoluant en translation dans sa position de fermeture soit sous l'effet de la poussée mécanique des moyens de rappel, soit sous l'effet du retournement du disque au-delà de la température critique.

Un avantage technique de cette solution est que le clapet peut comporter par exemple des pièces facilement disponibles dans le marché.

Avantageusement, le dispositif conique de retournement entraine mécaniquement la bille dans une position de fermeture du clapet lorsque la température dépasse la température critique.

Un avantage technique de cette solution est qu'une bague peut être agencée et disposée facilement sur une tige. En conséquence, l'intégration mécanique de la solution est simplifiée. La bille est un mécanisme simple, peu onéreux et facilement intégrable.

Avantageusement, la bille comprend un anneau solidaire de la bille, la bague entrainant ledit anneau sur une partie de sa surface lorsque le disque conique de retournement se retourne.

Un avantage technique de cette solution est que l'anneau permet d'augmenter la surface de contact avec la bague et optimise la transmission d'effort lors du déplacement du disque de retournement entrainant la translation du clapet.

Avantageusement, le dispositif de commande est piloté par une consigne électrique permettant la génération d'un champ magnétique au moyen d'un dispositif de bobinage, le noyau du clapet comprenant au moins pour une partie un matériau ferromagnétique, la force magnétique induite pouvant être supérieure à la poussée mécanique de manière à maintenir le clapet dans sa position ouverte en dessous d'une température critique.

Un avantage technique de cette solution est qu'elle s'intègre bien à un dispositif actionneur sans augmenter le volume d'un dispositif conventionnel. Le noyau étant en matériau ferromagnétique, il n'y a pas besoin d'insérer de pièces supplémentaires dans le clapet. Les bobines peuvent être simplement intégrées dans le bâti. Un autre avantage réside dans la simplicité de configuration à partir du choix d'un courant générant un champ magnétique. Les intensités de forces magnétiques résultantes sont donc facilement réglables.

Une variante du dispositif peut également être proposée. Cette variante concerne un dispositif de commande comprenant un dispositif de régulation hydraulique piloté par une commande hydraulique permettant d'alimenter la chambre du ressort soit par la pression ambiante, c'est-à-dire une basse pression, soit par la pression de pilotage, correspondant à une haute pression. La différence de pression entre celle régnant dans la chambre côté clapet et celle côté chambre ressort permet de générer une poussée retenant le clapet et pouvant être supérieure à la poussée mécanique de manière à maintenir le clapet dans sa position ouverte.

Un avantage technique de cette solution est qu'elle permet de réduire la puissance électrique requise par l'utilisation d'un muscle hydraulique intermédiaire.

Avantageusement, la commande hydraulique est soit une servovalve soit une valve de type solénoïde, également appelée un électrorobinet.

Avantageusement, le bâti comprend une troisième sortie, dite de pilotage, le dispositif de commande prélevant soit la pression provenant de ladite sortie soit la pression ambiante de manière à ce que cette pression pilote l'entrée du dispositif actionneur.

Un avantage technique de cette solution est qu'elle économise la production d'une énergie dite « muscle » puisque l'énergie utilisée hydrauliquement provient d'une sortie du dispositif actionneur lui-même. Le mécanisme peut donc être partiellement autoalimenté.

Le dispositif conique de retournement est également solidaire d'une bague amovible autour de la tige du clapet et entraînant également mécaniquement la bille dans une position de fermeture du clapet lorsque la température dépasse la température critique.

Une variante du dispositif de l'invention peut également être proposée, lorsque le dispositif conique de retournement permet d'agir sur un circuit électrique par une ouverture ou fermeture dudit circuit. Cette action sur le circuit permet de supprimer soit une force magnétique, soit une force hydraulique lorsque la température dépasse la température critique, ce qui permet de fermer le clapet sous la simple poussée mécanique du ressort.

Un avantage technique de cette solution est que cette technologie peut être facilement adaptable à un mécanisme existant puisque seul l'organe de commande est modifié.

Un des principaux avantages de la présente invention est la réduction de lignes de code dans le calculateur.

### BREVES DESCRIPTION DES FIGURES

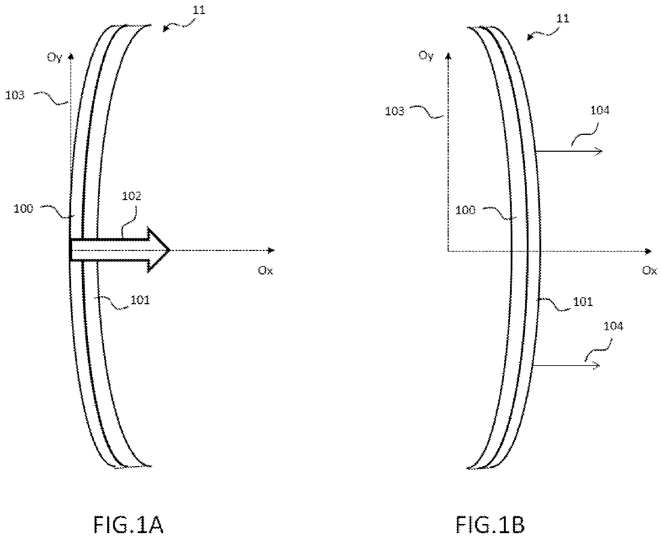

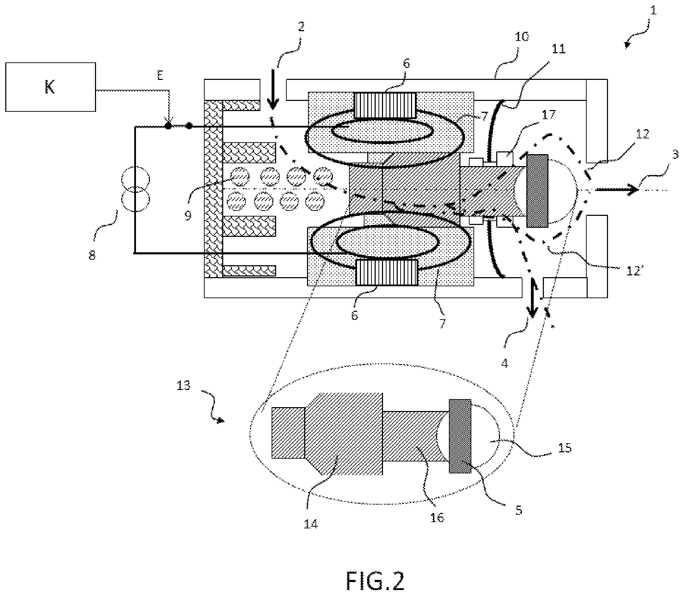

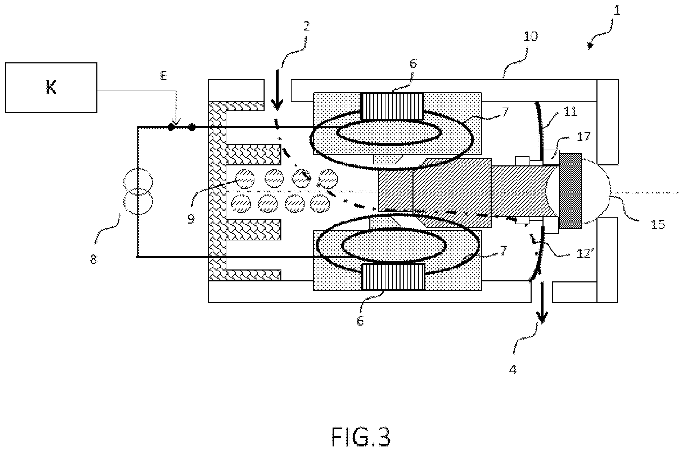

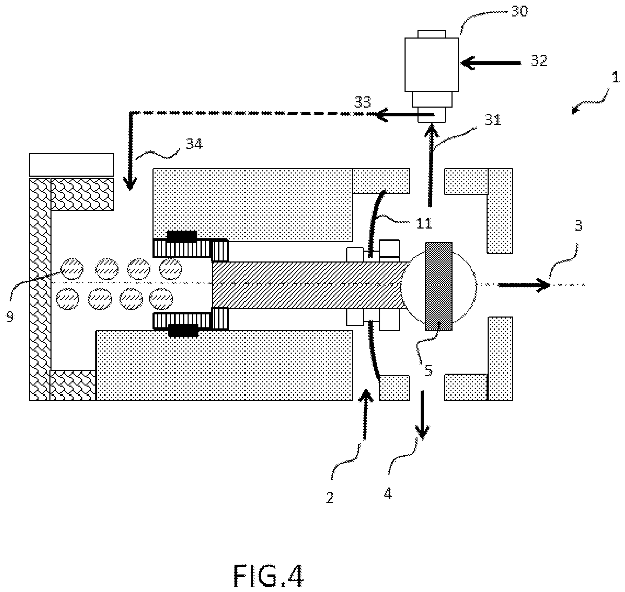

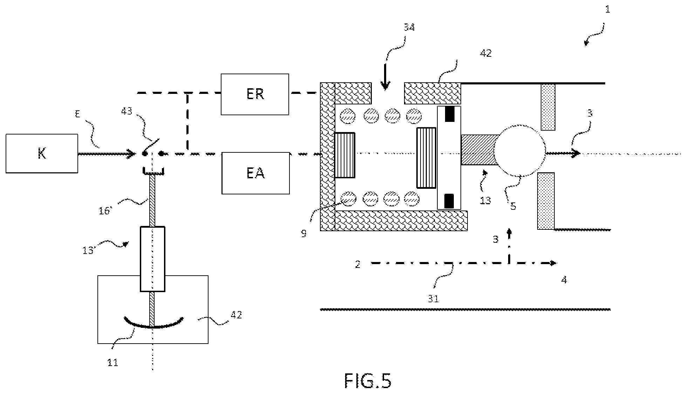

D'autres caractéristiques et avantages de l'invention ressortiront à la lecture de la description détaillée qui suit, en référence aux figures annexées, qui illustrent :
▪ figure 1A et 1B : un disque conique à retournement dans deux positions différentes selon la température ;
▪ figure 2 : un premier mode de réalisation d'une vanne de l'invention avec un dispositif de type électroaimant ;
▪ figure 3 : le premier mode de réalisation, le disque à retournement ayant engagé la fermeture du clapet ;
▪ figure 4 : un second mode de réalisation de l'invention avec un dispositif de commande hydraulique ;
▪ figure 5 : un troisième mode de réalisation dans lequel le disque à retournement est intégré dans un dispositif de coupure de la commande électrique.

### DESCRIPTION

Les figures ci-après illustrent différents modes de réalisation dans lesquels un disque conique à retournement est couplé électriquement ou mécaniquement à un dispositif actionneur tel qu'une vanne.

Dans un premier mode représenté aux figures 2 et 3, le disque conique à retournement est intégré mécaniquement au clapet d'un dispositif actionneur dans lequel des moyens de génération d'une force électromagnétique sont utilisés pour maintenir le clapet ouvert en dessous d'une température critique.

Dans un second mode de réalisation représenté à la figure 4, le disque conique à retournement est intégré mécaniquement au clapet d'un dispositif actionneur dans lequel des moyens de génération d'une force hydraulique sont utilisés pour maintenir le clapet ouvert en dessous d'une température critique.

Dans un troisième mode de réalisation, le disque conique à retournement est intégré à un dispositif de commande électrique permettant le pilotage d'une force soit hydraulique, soit électromagnétique, par exemple en activant sa suppression au-dessus d'une certaine température.

Chacun de ces modes est détaillé dans la description ci-après.
Les figures 1A et 1B représentent, pour la bonne compréhension des modes de réalisation détaillés ci-après, le fonctionnement d'un disque conique à retournement.
La figure 1A représente un disque conique à retournement, noté DCR dans la suite de la description, dans un premier état en dessous d'une certaine température, appelée « température critique ». La température critique du DCR est la température au-delà de laquelle le disque se retourne sous l'effet de l'augmentation de la température.

Le DCR, noté 11 sur la figure 1, comprend deux couches superposées 100, 101 sensiblement circulaires qui forment un anneau dans un plan de coupe transversal (Oy, Oz) non représenté sur la figure 1. Dans l'espace, le DCR forme un cône annulaire dans l'espace qui peut être sensiblement arrondi sur sa surface. La surface du DCR forme une tôle qui peut être plus ou moins régulière. Selon les modes de réalisation, d'autres formes sont envisageables dans la mesure où l'effet de retournement du disque peut être autorisé sous l'effet d'un dépassement d'une température critique.

Les deux couches 100, 101 superposées du DCR sont accolées et solidaires l'une de l'autre, de sorte qu'elles forment une unique pièce 11. Les deux couches 100, 101 restent accolées lors de toute utilisation dans le dispositif de l'invention. Les deux couches sont réalisées dans des matériaux différents ou des alliages ayant des taux de mélange différents de sorte que le coefficient de dilatation d'une première couche soit supérieur à celui d'une seconde couche.

De manière préférentielle, selon l'axe OY représenté sur les figures 1A ou 1B du repère 103, si une convention permet de définir le DCR comme concave sur la figure 1A, alors le DCR selon le même axe est convexe sur la figure 1B à cause du retournement.

En dessous d'une température critique, le DCR est alors défini comme concave et au-dessus de la température critique, il est défini comme convexe. Il s'agit ici de définir une convention et non de caractériser une forme structurelle d'une pièce mécanique.

La figure 1B représente notamment le DCR dans un second état au-delà d'une température critique.

Mécaniquement, le retournement du DCR résulte d'une force 102 s'exerçant sur toute la surface du DCR. Le retournement est engendré par la dilatation des deux couches comportant chacune un coefficient de dilatation différent et étant solidaires l'une de l'autre. Le retournement s'accompagne d'une force résultante linéaire dans la direction (Ox) qui a tendance à faire déplacer le disque dans le sens de l'axe (Ox) selon le mouvement représenté par les flèches 104 sous l'impulsion de ladite force résultante.

La température critique est définie par une fonction qui dépend des matériaux utilisés de chaque couche, de l'épaisseur de chaque couche, des diamètres minimal et maximal de l'anneau que forme le DCR. Une température critique souhaitée peut donc être aisément paramétrée dans la mesure où les dimensions du DCR peuvent être adaptées à un cas d'usage souhaité.

Le dispositif actionneur de l'invention comprend une partie fixe formant un bâti comportant une entrée destinée à recevoir un fluide, une sortie principale et une seconde dite « de prélèvement » et une partie mobile évoluant dans le bâti entre deux positions. Une première position permet de d'ouvrir la sortie de prélèvement et une seconde position permet de fermer la sortie de prélèvement.

Dans la suite de la description, on parlera généralement d'une position ouverte pour signifier que la sortie de prélèvement est ouverte et une position fermée pour signifier que la sortie de prélèvement est fermée. La sortie principale est constamment ouverte.

La figure 2 représente le premier mode de réalisation du dispositif actionneur qui comporte un clapet, ce dernier étant dans une position ouverte.

Une vanne 1 comporte un électroaimant 6 commandé par un calculateur K. Le calculateur K comporte des moyens de sélection d'un courant E provenant d'un générateur 8, ledit courant permettant de gérer un champ magnétique 7 à partir d'une bobine 6.

La bobine 6 est avantageusement comprise dans le bâti 10 de la vanne 1 et est alimentée par le courant E provenant du calculateur K.

Dans ce premier mode de réalisation, l'électro-aimant 6 comprend une tige équipée d'un clapet amovible en translation.

La bobine 6 est susceptible de générer un champ magnétique permettant de générer une force électromagnétique maintenant la partie mobile13, formant le clapet qui comprend pour une partie un matériau ferromagnétique, dans la première position, pour autant que la température soit située en dessous d'une température critique.

Un ressort de rappel 9 permet de générer une force qui s'oppose à un sens d'un mouvement de translation du clapet 13 qui évolue entre une position d'ouverture permettant d'ouvrir une sortie de prélèvement 3 et une position de fermeture permettant de fermer la sortie 3 et de « bypasser » le fluide entrant dans la vanne vers la sortie principale 4.

La seconde position permet de laisser s'écouler une partie du fluide vers la sortie de la vanne notée 3.

Le ressort de rappel 9 permet de générer une force dite de « tarage ». Cette dernière exerce une force tendant à repousser le clapet vers sa seconde position de manière à obstruer la sortie de prélèvement 3.

La seconde position, position fermée est soit obtenue par l'effort du ressort en l'absence de force électromagnétique, soit par l'effort du disque de retournement lors de son retournement, effort dimensionné pour vaincre l'effort électromagnétique subsistant.

Le dispositif actionneur de la figure 1 comprend un disque conique à retournement 11, noté également DCR, qui est représenté dans un premier état lorsque la température est en dessous d'une température critique prédéfinie ou connue. Dans ce premier état, le DCR présente une surface concave face à la sortie de prélèvement 3. Au-delà de la température critique, le DCR se retourne et présente une surface convexe vers la sortie de prélèvement, il est alors dans un second état. Selon la température, le DCR est dans le premier ou le second état.

Dans une variante de réalisation, le DCR est fixé ou en appui sur une bague 17 qui coulisse librement en translation autour du clapet 13. Lorsque le DCR se retourne, une force d'entrainement a tendance à générer un mouvement du DCR qui entraine en translation la bague 17 autour du clapet.

Dans une variante de réalisation, le clapet comprend une bille 15 qui permet de fermer la sortie de prélèvement 3 en obstruant la sortie et une butée 5 qui permet d'augmenter la surface de contact entre la bague 17 et le clapet 13. En outre, le clapet comporte une tige 16 autour de laquelle la bague 17 peut être agencée de manière à coulisser le long de ladite tige 16. Le clapet comprend également un noyau qui comprend au moins pour une partie un matériau ferromagnétique réagissant au champ magnétique induit par la ou les bobine(s).

La force de rappel du ressort et la force de maintien du champ magnétique s'opposent. Le courant E alimentant la bobine 6 peut être contrôlé de manière à générer une force magnétique souhaitée.

Si la force magnétique n'est plus alimentée, le ressort de rappel repousse naturellement le clapet 13 vers la position de fermeture de la sortie de prélèvement.

Si nous notons Tc la température critique, nous avons les cas suivants :
- si T > Tc, le clapet ferme la sortie de prélèvement 3 car le DCR s'est retourné ;
- si T < Tc, le clapet est dans une position qui dépend de la résultante des forces entre la force magnétique appliquée et la force de tarage exercée par le ressort.

Lorsque la température est en dessous du seuil critique, la position du clapet résulte de l'équilibre entre la force de rappel du ressort et la force d'attraction magnétique existante ou non existante suivant l'état alimenté ou non alimenté de la bobine.

En conclusion, pour une température inférieure au seuil prédéfini défini par la température critique, l'alimentation de la bobine pilote l'ouverture et la fermeture du débit du liquide prélevé à la sortie de prélèvement.

La figure 3 représente la vanne dans laquelle le DCR s'est retourné, la température ayant dépassée le seuil de la température critique. La vanne est dans une position dans laquelle le fluide entrant au niveau de l'entrée 2 est intégralement traversant vers la sortie principale 4. Aucune partie du fluide n'est prélevée par la sortie 3.

La figure 4 représente un second mode de réalisation dans lequel la force générée pour piloter l'ouverture ou la fermeture du clapet en dessous de la température critique n'est plus une force magnétique mais une force hydraulique.

Une force hydraulique est générée par une différence de pression entre une entrée 34 située en amont du clapet et la sortie du dispositif actionneur 1 prise au niveau de la sortie 4 ou à n'importe quel point de la cavité située en aval du clapet avant l'évacuation du fluide.

Dans la figure 4, l'entrée principale 2 du fluide est représentée en bas de la figure et à proximité de la sortie principale 4. Bien entendu, toute autre disposition équivalente est possible dans ce mode de réalisation.

Lorsqu'aucune force hydraulique n'est générée autre que celle générée par le débit du fluide au niveau de l'entrée principale 2, cette dernière s'oppose naturellement à la force de tarage du ressort 9. En effet, l'entrée 2 étant située en aval du clapet, la force hydraulique issue du débit principal tend à s'opposer à la force de tarage du ressort.

La différence de pression peut être obtenue par l'introduction d'un fluide à un débit adapté à l'entrée 34 du dispositif actionneur 1. La différence de pression entre l'entrée du bâti 34 et la sortie principale 4 génère une poussée entrainant le clapet vers la position de fermeture.

Un dispositif de commande électrique pilote hydrauliquement un dispositif de régulation hydraulique. Dans le mode de réalisation de la figure 4, la commande est hydraulique.

Le fluide 33 introduit à l'entrée du dispositif actionneur 1, peut provenir d'un dispositif de régulation hydraulique adapté tel qu'une vanne de pilotage pilotée par un solénoïde 30 ou une servovalve. Dans une variante de réalisation, une tige coulisse à l'intérieur d'un tiroir équipé du disque de retournement.

Une commande électrique ou magnétique permet de piloter le dispositif de régulation hydraulique de manière à contrôler la pression entrante, selon les cas : pouvant être une basse pression ou une haute pression, à l'entrée 34. En conséquence, une force hydraulique peut être générée de manière à obtenir la fermeture ou l'ouverture du clapet suivant l'état d' équilibre des forces résultantes entre la force de tarage du ressort et la force hydraulique résultante de la différence de pression entre l'aval et l'amont du clapet.

Dans un mode de réalisation amélioré, le pilotage hydraulique en fermeture du clapet 13 est obtenue par la pression prélevée par l'intermédiaire d'une sortie 31, dite sortie de pilotage. Par contre le pilotage hydraulique en ouverture du clapet 13 est obtenu par la pression ambiante

Un avantage de cette solution est de récupérer une partie de l'énergie du fluide en sortie du dispositif actionneur 1 de manière à commander le mouvement du clapet 13.

Le prélèvement de la pression 3 à la sortie du dispositif actionneur 1 peut également servir à piloter le dispositif de régulation hydraulique pour obtenir la fermeture du clapet. Le clapet, le ressort, le dispositif de régulation hydraulique 30 ou 30' ainsi que l'ouverture de pilotage 31 peuvent être adaptés pour dimensionner un équilibre des forces hydraulique facilement pilotable à partir d'une commande électrique externe.

Toujours avec la même notation Tc représentant la température critique du DCR, nous avons les cas suivants :
- si T > Tc, le clapet ferme la sortie de prélèvement 3 car le DCR s'est retourné ;
- si T < Tc, le clapet est dans une position qui dépend de la résultante des forces entre la force hydraulique obtenue à partir du dispositif de régulation hydraulique et la force de tarage exercée par le ressort.

La figure 5 représente un troisième mode de réalisation de l'invention dans lequel le disque à retournement est intégré dans le dispositif de commande du dispositif actionneur 1.

Le dispositif de commande 42 comprend par exemple un DCR qui est agencé de manière à engager le mouvement d'une tige 16' d'un composant mobile 13'.

Lorsque la température dépasse la température critique le DCR se retourne et entraine un déplacement du composant mobile 13'. Le composant mobile 13' active ou désactive une commande électrique E au niveau d'un interrupteur 43 selon l'implémentation de la solution.

Le courant transmis lorsque l'interrupteur 43 est fermé forme une consigne électrique pilotant un dispositif électromagnétique ou un dispositif de régulation hydraulique.

Ces deux dispositifs sont représentés sur la figure 5 respectivement par les notations ER désignant par exemple un électrorobinet pour l'injection d'un fluide modifiant la pression à l'intérieur du dispositif actionneur via l'entrée de pilotage 34 et EA désignant un électroaimant susceptible de générer une force électromagnétique. Ces deux dispositifs peuvent être utilisés de manière alternative, néanmoins ils sont tous deux représentés sur la figure 5.

L'entrée de pilotage 34 permet d'introduire un fluide de manière à générer une différence de pression en aval et en amont du clapet 13 de manière à générer une force résultante hydraulique permettant de déplacer le clapet vers la sortie 3 de manière à l'obstruer.

Lorsqu'aucun fluide de régulation n'est introduit dans l'entrée 34, alors le clapet est en position d'ouverture, la force de tarage du ressort et la force induite par la pression du fluide provenant de l'entrée 2 en aval du clapet permet de maintenir ce dernier en équilibre.

Dans une variante de réalisation, le DCR peut être associé à un micro-switch qui permet le retournement et agit sur le circuit électrique par une coupure ou une fermeture du circuit. Le micro-switch permet de piloter par exemple l'alimentation du solénoïde ou de la servovalve si un dispositif ER est utilisé ou l'alimentation d'une bobine si un dispositif EA est utilisé.

En absence de force hydraulique ou magnétique générée par un dispositif de commande 42, le ressort déplace le clapet 13 vers la position de fermeture d'une sortie de prélèvement 32.

Lorsque la température est inférieure à la température critique de retournement, il n'y a pas de coupure du circuit d'alimentation par le micro-switch. La position du clapet dépend de l'état alimenté ou non alimenté de la bobine lorsqu'un dispositif de type EA ou ER. Un débit d'entrée 2 suit un canal vers une sortie principale 4. Lorsque le clapet 13 est en position ouverte, la sortie de prélèvement 3 permet de d'acheminer une partie du fluide s'écoulant dans le dispositif actionneur 1 vers une autre conduit non représenté.

Ce mode de réalisation peut être combiné au second mode de la figure 4 dans lequel une partie du fluide en aval du clapet était prélevé et piloté par un dispositif de régulation hydraulique de type EA par exemple.

L'invention comporte de nombreux avantages, notamment l'invention permet de limiter les risques de fuites grâce à l'absence de fluide supplémentaire. En outre, l'invention permet d'obtenir un gain d'encombrement notamment grâce à la suppression des constituants de l'enceinte comprenant le liquide ou gaz supplémentaire

Enfin, l'invention permet également de diminuer l'encombrement système grâce au remplacement de deux vannes par une seule vanne qui assure fonctionnellement les rôles des deux vannes utilisées dans l'art antérieur. Ce gain est obtenu tout en réduisant au maximum les commandes du calculateur, également appelé FADEC selon certains produits. Notamment, une seule commande est nécessaire pour activer la vanne parmi toutes ses configurations possibles.

Cet avantage confère une robustesse et une simplicité accrue du système dans lequel la vanne de l'invention est intégrée.

## Revendications

1. Dispositif actionneur (1), comprenant :
• une partie fixe formant un bâti (10) comportant une entrée (2) destinée à recevoir un fluide, une sortie principale (4) et une seconde sortie (3) dite « de prélèvement » et des moyens de rappel (9) permettant d'exercer une poussée mécanique sur une partie mobile ;
• une partie mobile comportant :
∘ un clapet (13) comprenant une tige (16) évoluant en translation entre une position d'ouverture de la sortie de prélèvement (3) et une position de fermeture de la dite sortie (3) sous l'effet de la poussée mécanique ;
• un dispositif thermostatique comprenant un disque conique de retournement (11), le retournement du disque au-delà d'une température critique connue, entrainant le clapet (13) dans sa position de fermeture ;
• un dispositif de commande (30, 42, (K, 8, 6)), permettant la génération d'une force de maintien du clapet, le dispositif de commande pouvant être piloté de manière à ce qu'en dessous de la température critique, l'ouverture ou la fermeture du clapet résulte du bilan des forces entre la force de maintien et la poussée mécanique,
**caractérisé en ce que** le disque conique de retournement (11) est solidaire d'une bague (17) amovible autour de la tige (16) du clapet (13).

2. Dispositif actionneur selon la revendication 1, **caractérisé en ce que** la poussée mécanique est exercée par au moins un ressort (9) sous l'effet d'une force de rappel.

3. Dispositif actionneur selon l'une quelconque des revendications 1 à 2, **caractérisé en ce que** le clapet comprend un noyau, ladite tige (16) et une bille (15) de fermeture solidaire évoluant en translation dans sa position de fermeture soit sous l'effet de la poussée mécanique des moyens de rappel (9), soit sous l'effet du retournement du disque (11) au-delà de la température critique.

4. Dispositif actionneur selon la revendication 3, **caractérisé en ce que** le dispositif conique de retournement (11) entraine mécaniquement la bille (15) dans une position de fermeture du clapet (13) lorsque la température dépasse la température critique.

5. Dispositif actionneur selon la revendication 4, **caractérisé en ce que** la bille comprend un anneau solidaire (5) de la bille (15), la bague (17) entrainant ledit anneau (5) sur une partie de sa surface lorsque le disque conique de retournement (11) se retourne.

6. Dispositif actionneur selon l'une quelconque des revendications 1 à 5, **caractérisé en ce que** le dispositif de commande (30, 42, (K, 8, 6)) est piloté par une consigne électrique (E) permettant la génération d'un champ magnétique (7) au moyen d'un dispositif de bobinage (6), le noyau du clapet (13) comprenant au moins pour une partie un matériau ferromagnétique, la force magnétique induite pouvant être supérieure à la poussée mécanique de manière à maintenir le clapet (13) dans sa position ouverte.

7. Dispositif actionneur selon l'une quelconque des revendications 1 à 5, **caractérisé en ce que** le dispositif de commande (30, 42, (K, 8, 6)) comprend un dispositif de régulation hydraulique (30) piloté par une commande hydraulique permettant d'introduire un fluide à un pression donné à l'entrée (34) du dispositif actionneur (1), la différence de pression entre l'entrée (34) du bâti et la sortie principale (4) générant une poussée retenant le clapet (13) et pouvant être supérieure à la poussée mécanique de manière à maintenir le clapet (13) dans sa position ouverte.

8. Dispositif actionneur selon la revendication 7, **caractérisé en ce que** le dispositif de régulation hydraulique est une servovalve.

9. Dispositif actionneur selon la revendication 7, **caractérisé en ce que** le dispositif de régulation hydraulique est une valve de type solénoïde.

10. Dispositif actionneur selon l'une quelconque des revendications 8 à 9, **caractérisé en ce que** le bâti comprend une troisième sortie (31), dite de pilotage permettant à la commande hydraulique de piloter la fermeture du clapet (13) lorsque la pression est prélevée à la troisième sortie (31) et pilotant l'ouverture du clapet (13) par le prélèvement d'une pression ambiante.

11. Dispositif actionneur selon l'une quelconque des revendications 6 à 10, **caractérisé en ce que** le dispositif conique de retournement (11) permet d'agir sur un circuit électrique du dispositif de commande (42, 13', 16') par une ouverture ou fermeture dudit circuit de manière à générer une force soit magnétique soit hydraulique permettant de fermer le clapet (13) lorsque la température dépasse la température critique.

12. Vanne comprenant un dispositif actionneur selon l'une quelconque des revendications précédentes.

## Patentansprüche

1. Betätigungsvorrichtung (1), umfassend:
• einen festen Teil, der ein Gestell (10) bildet, umfassend einen Eingang (2), der zur Aufnahme eines Fluids bestimmt ist, einen Hauptausgang (4) und einen zweiten Ausgang (3), bezeichnet als "Entnahme" und Rückholmittel (9), die die Ausübung eines mechanischen Schubs auf einen mobilen Teil zulassen;
• einen mobilen Teil, umfassend:
o eine Klappe (13), die einen Stift (16) umfasst, der sich in Translation zwischen einer Öffnungsposition des Entnahmeausgangs (3) und einer Verschlussposition des genannten Ausgangs (3) unter der Wirkung des mechanischen Schubs bewegt;
• eine thermostatische Vorrichtung, umfassend eine konische Wendescheibe (11), wobei das Wenden der Scheibe über eine bekannte, kritische Temperatur hinweg, die Klappe (13) in ihrer Verschlussposition antreibt;
• eine Steuervorrichtung (30, 42, (K, 8. 6.)), die das Generieren einer Haltekraft der Klappe zulässt, wobei die Steuervorrichtung derart gesteuert sein kann, dass das Öffnen oder das Verschließen der Klappe unterhalb der kritischen Temperatur aus der Bilanz der Kräfte zwischen der Haltekraft und dem mechanischen Schub resultiert,
**dadurch gekennzeichnet, dass** die konische Wendescheibe (11) mit einem Ring (17) fest verbunden ist, der um den Stift (16) der Klappe (13) abnehmbar ist.

2. Betätigungsvorrichtung gemäß Anspruch 1, **dadurch gekennzeichnet, dass** der mechanische Schub durch wenigstens eine Feder (9) unter der Wirkung einer Rückholkraft ausgeübt wird.

3. Betätigungsvorrichtung gemäß irgendeinem der Ansprüche 1 bis 2, **dadurch gekennzeichnet, dass** die Klappe einen Kern umfasst, wobei der genannte Stift (16) und eine fest verbundene Verschlusskugel (15) sich in Translation in ihrer Verschlussposition entweder unter der Wirkung des mechanischen Schubs der Rückholmittel (9) oder unter der Wirkung des Wendens der Scheibe (11) oberhalb der kritischen Temperatur bewegen.

4. Betätigungsvorrichtung gemäß Anspruch 3, **dadurch gekennzeichnet, dass** die konische Wendevorrichtung (11) die Kugel (15) in einer Verschlussposition der Klappe (13) mechanisch antreibt, wenn die Temperatur die kritische Temperatur übersteigt.

5. Betätigungsvorrichtung gemäß Anspruch 4, **dadurch gekennzeichnet, dass** die Kugel eine mit der Kugel (15) fest verbundene Manschette (5) umfasst, wobei der Ring (17) die genannte Manschette (5) auf dem Teil der Oberfläche antreibt, wenn die konische Wendescheibe (11) sich umdreht.

6. Betätigungsvorrichtung gemäß irgendeinem der Ansprüche 1 bis 5, **dadurch gekennzeichnet, dass** die Steuervorrichtung (30, 42, (K, 8, 6,)) durch einen elektrischen Sollwert (E) gesteuert wird, der das Generieren eines Magnetfeldes (7) mittels einer Wicklungsvorrichtung (6) zulässt, wobei der Kern der Klappe (13) wenigstens bei einem Teil ein ferromagnetisches Material umfasst, wobei die induzierte Magnetkraft derart größer sein kann als der mechanische Schub, dass die Klappe (13) in ihrer offenen Position gehalten wird.

7. Betätigungsvorrichtung gemäß irgendeinem der Ansprüche 1 bis 5, **dadurch gekennzeichnet, dass** die Steuervorrichtung (30, 42, (K, 8, 6)) eine hydraulische Regulierungsvorrichtung (30) umfasst, die durch eine hydraulische Steuerung gesteuert ist, die das Einführen eines mit einem bestimmten Druck beaufschlagten Fluids am Eingang (34) der Betätigungsvorrichtung (1) zulässt, wobei die Druckdifferenz zwischen dem Eingang (34) des Gestells und dem Hauptausgang (4) einen Schub generiert, der die Klappe (13) zurückhält und derart größer sein kann als der mechanische Schub, dass die Klappe (13) in ihrer offenen Position gehalten wird.

8. Betätigungsvorrichtung gemäß Anspruch 7, **dadurch gekennzeichnet, dass** die hydraulische Regulierungsvorrichtung ein Servoventil ist.

9. Betätigungsvorrichtung gemäß Anspruch 7, **dadurch gekennzeichnet, dass** die hydraulische Regulierungsvorrichtung ein Ventil vom Typ Solenoid ist.

10. Betätigungsvorrichtung gemäß irgendeinem der Ansprüche 8 bis 9, **dadurch gekennzeichnet, dass** das Gestell einen dritten Ausgang (31), bezeichnet als Steuerung, umfasst, der der hydraulischen Steuerung die Steuerung des Verschlusses der Klappe (13) erlaubt, wenn der Druck am dritten Ausgang (31) entnommen wird, und die Öffnung der Klappe (13) durch die Entnahme eines Raumdrucks steuert.

11. Betätigungsvorrichtung gemäß irgendeinem der Ansprüche 6 bis 10, **dadurch gekennzeichnet, dass** die konische Wendevorrichtung (11) ein Einwirken auf einen elektrischen Schaltkreis der Steuervorrichtung (42, 13', 16') durch eine Öffnung oder einen Verschluss des genannten Schaltkreises derart zulässt, dass eine entweder magnetische oder hydraulische Kraft generiert wird, die das Verschließen der Klappe (13) zulässt, wenn die Temperatur die kritische Temperatur übersteigt.

12. Schieber, umfassend eine Betätigungsvorrichtung gemäß irgendeinem der voranstehenden Ansprüche.

## Claims

1. Actuating device (1), **characterised in that** it comprises:
• a fixed portion forming a frame (10) comprising an inlet (2) intended to receive a fluid, a main outlet (4) and a second outlet (3) known as "bleed" outlet and return means (9) for exerting a mechanical force on a movable portion;
• a movable portion comprising:
∘ a shutter (13) comprising a rod moving in translation between an open position of the bleed outlet (3) and a closed position of said outlet (3) under the effect of the mechanical force;
• a thermostatic device comprising a conical turning disc (11) integral with a collar (17) movable around the rod of the shutter (13), the turning of the disc above a known critical temperature driving the shutter (13) to the closed position of same;
• a control device (30, 42, (K, 8, 6)), allowing a holding force for holding the shutter to be generated, the control device being able to be controlled in such a way that below the critical temperature, the opening or the closing of the shutter results from the balance of forces between the holding force and the mechanical force.

2. Actuating device according to claim 1, **characterised in that** the mechanical force is exerted by at least one spring (9) under the effect of a return force.

3. Actuating device according to any of claims 1 to 2, **characterised in that** the shutter comprises a core, a rod (16) and an integral closing ball (15) moving in translation to the closed position of same either under the effect of the mechanical force return means (9), or under the effect of the turning of the disc (11) above the critical temperature.

4. Actuating device according to claim 3, **characterised in that** the conical turning device (11) mechanically drives the ball (15) into a closed position of the shutter (13) when the temperature exceeds the critical temperature.

5. Actuating device according to claim 4, **characterised in that** the ball comprises a ring integral (5) with the ball (15), the collar (17) driving said ring (5) on a portion of its surface when the conical turning disc (11) turns round.

6. Actuating device according to any of claims 1 to 5, **characterised in that** the control device (30, 42, (K, 8, 6)) is controlled by an electrical set point (E) allowing a magnetic field to be generated (7) by means of a coiling device (6), the core of the shutter (13) comprising at least in part a ferromagnetic material, the induced magnetic force being able to be greater than the mechanical force so as to maintain the shutter (13) in its open position.

7. Actuating device according to any of claims 1 to 5, **characterised in that** the control device (30, 42, (K, 8, 6)) comprises a hydraulic regulating device (30) controlled by a hydraulic control making it possible to introduce a fluid at a given pressure at the inlet (34) of the actuating device (1), the pressure difference between the inlet (34) of the frame and the main outlet (4) generating a force retaining the shutter (13) and which may be greater than the mechanical force so as to maintain the shutter (13) in its open position.

8. Actuating device according to claim 7, **characterised in that** the hydraulic regulating device is a servovalve.

9. Actuating device according to claim 7, **characterised in that** the hydraulic regulating device is a solenoid type valve.

10. Actuating device according to any of claims 8 to 9, **characterised in that** the frame comprises a third outlet (31), known as control outlet, enabling the hydraulic control to control the closing of the shutter (13) when pressure is bled at the third outlet (31) and controlling the opening of the shutter (13) by the bleeding of an ambient pressure.

11. Actuating device according to any of claims 6 to 10, **characterised in that** the conical turning device (11) makes it possible to act on an electrical circuit of the control device (42, 13', 16') by an opening or closing of said circuit so as to generate either a magnetic or hydraulic force allowing the shutter (13) to be closed when the temperature exceeds the critical temperature.

12. Valve comprising an actuating device according to any of the preceding claims.
